# EUROPÄISCHE PATENTSCHRIFT

(11) **EP 3 235 785 B1**
(45) Veröffentlichungstag und Bekanntmachung des Hinweises auf die Patenterteilung: **02.01.2019**
(21) Anmeldenummer: 16400012.7
(22) Anmeldetag: 22.04.2016
(51) Int. Cl.: C01B 3/38

(54) **VERFAHREN UND ANLAGE ZUR ERZEUGUNG VON SYNTHESEGAS MITTELS KATALYTISCHER DAMPFREFORMIERUNG EINES KOHLENWASSERSTOFFHALTIGEN EINSATZGASES**
METHOD AND ASSEMBLY FOR THE PRODUCTION OF SYNTHESIS GAS BY CATALYTIC STEAM REFORMING OF A HYDROCARBONACEOUS FEED GAS
PROCÉDÉ ET INSTALLATION POUR LA PRODUCTION D'UN GAZ SYNTHÉTIQUE AU MOYEN DE LA RÉFORMATION DE VAPEUR CATALYTIQUE D'UN GAZ D'ALIMENTATION CONTENANT DES HYDROCARBURES

(43) Veröffentlichungstag der Anmeldung: 25.10.2017
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Tadiello, Jean-Philippe, D-60431 Frankfurt am Main (DE); Kang, Taekyu, Newark, Delaware 19711 (US); Wenz, Thomas, 40476 Düsseldorf (DE); Yue, Chen, D-60326 Frankfurt am Main (DE)
(74) Vertreter: Dropsch, Holger

(56) Entgegenhaltungen:
- EP-A2- 1 849 747
- GB-A- 2 006 814
- US-A1- 2005 288 381

## Beschreibung

### Gebiet der Erfindung

Die Erfindung betrifft ein Verfahren zur Erzeugung eines hauptsächlich aus Wasserstoff und Kohlenmonoxid bestehenden Synthesegases durch katalytische Dampfreformierung eines kohlenwasserstoffhaltigen Einsatzgases, wobei die für den Ablauf der chemischen Reformierungsreaktionen erforderliche Wärme von Brennern unter Erzeugung eines Rauchgases erzeugt wird und wobei, unter Nutzung der im Synthese- und im Rauchgas enthaltenen Wärme ein Reindampf aus Kesselspeisewasser und ein Prozessdampf aus Prozesskondensat erzeugt wird.

Die Erfindung betrifft weiterhin eine Anlage zur Durchführung dieses Verfahrens.

### Stand der Technik

Derartige Verfahren und Anlagen sind bekannt. Das diesen zugrunde liegende Verfahren zur katalytischer Dampfreformierung eines kohlenwasserstoffhaltigen Einsatzgases ist beispielsweise in Ullmanns Encyclopedia of Industrial Chemistry, Sixth Edition, Vol. 15, Gas Production, Chapter 2. beschrieben ist. Die Einsatzgase, ein kohlenwasserstoffhaltiges Gas, wie z. B. Erdgas und Wasserdampf werden dabei bei erhöhtem Druck, z. B. bei 20 bis 35 bar, und hoher Temperatur, z. B. 800 bis 950 °C, durch von außen beheizte, mit Katalysator gefüllte Reaktorrohre geleitet. Dabei werden die Einsatzgase in wasserstoff- und kohlenmonoxidreiches Synthesegas umgewandelt. Ein derartiger Röhrenreaktor wird häufig als SMR und das Verfahren als SMR-Verfahren bezeichnet, abgekürzt für Steam-Methane-Reformer. Für die Abtrennung des Wasserstoffanteils aus dem Synthesegas wird häufig das Pressure-Swing-Adsorption-Verfahren angewandt, das im selben Ullmann-Band, im Kapitel 5.5.3 beschrieben ist.
Für die Wirtschaftlichkeit des Verfahrens ist es sehr wichtig, die für die Aufheizung der Einsatzgase und die Durchführung der, in der Summe, endothermen Reformierungsreaktionen aufgewendete Heizenergie möglichst weitgehend zur Dampferzeugung zu verwenden. Der, zusammen mit dem kohlenwasserstoffhaltigen Einsatzgas, eingesetzte Wasserdampf wird als Prozessdampf bezeichnet. Er wird durch Wiederverdampfen des aus dem Synthesegas, bei dessen Abkühlung, gebildeten und abgeschiedenen Kondensats gewonnen. Der Wärmegehalt des Synthese- und des Rauchgases übersteigt allerdings die zum Erzeugen des Prozessdampfs benötigte Wärmemenge. Um diese Überschusswärme sinnvoll zu nutzen, wird sie zur Erzeugung von sogenanntem Exportdampf, der hauptsächlich außerhalb des SMR-Prozesses verwendet wird, genutzt. Um den Exportdampf nicht mit Verunreinigungen aus dem SMR-Prozess zu belasten, wird zu seiner Erzeugung frisches Kesselspeisewasser eingesetzt. Ein Teil des Exportdampfs wird genutzt, um Abschlämmverluste bei der Prozessdampferzeugung auszugleichen.
Die Nutzung der im Synthese- und im Rauchgas enthaltenen Wärme zur Dampferzeugung erfolgt in vielen Fällen, indem ein indirekter Wärmeaustausch zwischen diesen Gasen und dem Prozesskondensat und dem Kesselspeisewasser durchgeführt wird. Die deutsche Patentschrift DE 10 2010 044 939 B3 beschreibt ein derartig ausgeführtes Verfahren. US 2005/0288381 A1 offenbart ebenfalls ein derartig ausgeführtes Verfahren. Die Aufgabe der Erfindung besteht darin, ein Verfahren und eine Anlage zur Verfügung zu stellen, in der die Wärmeübertragung vom Synthese- und vom Rauchgas zur Erzeugung der der Dämpfe alternativ gelöst wird.

### Beschreibung der Erfindung

Die Aufgabe wird durch das Verfahren gemäß Anspruch 1 und eine erfindungsgemäße Anlage mit den Merkmalen des Anspruchs 2 gelöst.

### Erfindungsgemäßes Verfahren:

Verfahren zur Erzeugung eines hauptsächlich aus Wasserstoff und Kohlenmonoxid bestehenden Synthesegases durch katalytische Dampfreformierung eines kohlenwasserstoffhaltigen Einsatzgases, wobei die für den Ablauf der chemischen Reformierungsreaktionen erforderliche Wärme von Brennern unter Erzeugung eines Rauchgases erzeugt wird und wobei, unter Nutzung der im Synthesegas und im Rauchgas enthaltenen Wärme, ein Reindampf aus Kesselspeisewasser und ein Prozessdampf aus Prozesskondensat erzeugt wird, dadurch gekennzeichnet, dass für die Erzeugung des Reindampfs Synthesegas und Rauchgas und für die Erzeugung des Prozessdampfs ein Teil des Reindampfs als Wärmeträgermedium verwendet wird und der restliche Teil des Reindampfs als Exportdampf aus dem Verfahren ausgeleitet wird und dass die jeweiligen Drücke des Teils des Reindampfs, der als Wärmeträgermedium für die Erzeugung von Prozessdampf verwendet wird, und des Teils, der als Exportdampf aus dem Verfahren ausgeleitet wird, unabhängig voneinander eingestellt werden. Ein häufig vom verfahrensexternen Verbraucher geforderter Druck für den Exportdampf beträgt 52 bar. Dieser Druck ist aber für die verfahrensinterne Verwendung des Dampfs als Wärmeträgermedium nicht optimal. Diese Ausgestaltung ermöglicht es, den Druck für diese interne Nutzung auf beispielsweise 39 bar zu senken. Durch diese Druckabsenkung wird die Kondensationsenthalpie des Dampfs um 5,8% gesteigert, was zu einer Senkung der für die Erzeugung von Prozessdampf benötigten Menge an Reindampf führt. Außerdem können die für die Prozessdampferzeugung verwendeten Teile auf diesen geringeren Druck, und damit kostengünstiger, ausgelegt werden.

### Erfindungsgemäße Anlage:

Anlage zur Durchführung des erfindungsgemäßen Verfahrens, umfassend:
- Mindestens einen Röhrenofen zur Durchführung der katalytischen Dampfreformierung,
- Einen Kessel zur thermischen Entgasung von Kesselspeisewasser,
- Einen Dampfkessel zur Erzeugung von Reindampf aus Kesselspeisewasser,
- Jeweils mindestens einen Wärmetauscher für die Erwärmung und Verdampfung des Kesselspeisewassers durch Synthesegas und durch Rauchgas,
- Mindestens einen Apparat zur mechanischen Abtrennung von Kondensat aus dem Synthesegas,
- Einen Dampfkessel zur Erzeugung von Prozessdampf, ausgestattet mit einem Wärmetauscher geeignet zur Verwendung von Reindampf als Wärmeträgermedium, dadurch gekennzeichnet, dass separate Regelungsvorrichtungen für die Einstellung und Regelung der Drücke des Teils des Reindampfs, der als Wärmeträgermedium für die Erzeugung von Prozessdampf verwendet wird, und des Teils, der als Exportdampf aus dem Verfahren ausgeleitet wird, vorhanden sind. Durch diese Ausstattung kann der Dampfdruck auf die Anforderungen des Exportdampfabnehmers und auch der internen Prozessdampferzeugung separat eingestellt werden.

Eine bevorzugte Ausgestaltung der erfindungsgemäßen Anlage ist dadurch gekennzeichnet, dass der Dampfkessel zur Erzeugung von Prozessdampf mit einem innenliegenden Plattenwärmetauscher ausgestattet ist. Plattenwärmetauscher stellen so viel Wärmetauscherfläche bezogen auf die Außenabmessungen des Wärmetauschers zur Verfügung, dass der Wärmetauscher im Dampfkessel integriert werden und ein außenliegender Wärmetauscher somit entfallen kann. Durch diese Bauweise wird der Platzbedarf für die Anlagenteile der Prozessdampferzeugung verringert.
Eine weitere bevorzugte Ausgestaltung der erfindungsgemäßen Anlage ist dadurch gekennzeichnet, dass die mit Prozesskondensat und Prozessdampf in Berührung kommenden Anlagenteile aus rostfreiem Stahl bestehen. Durch diese Bauweise ist es möglich, Verunreinigungen, wie CO und CO₂, im Prozesskondensat zu belassen, d.h. die Umwelt wird nicht durch eine Entgasung des Prozesskondensats belastet und diese Bestandteile werden, über den Prozessdampf, dem Reformierungsprozess wieder zugeführt. Durch die Verwendung von Edelstahl kann auch die Zugabe von Chemikalien zur Bindung von Sauerstoff und zur pH-Einstellung unterbleiben.

### Ausführungsbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

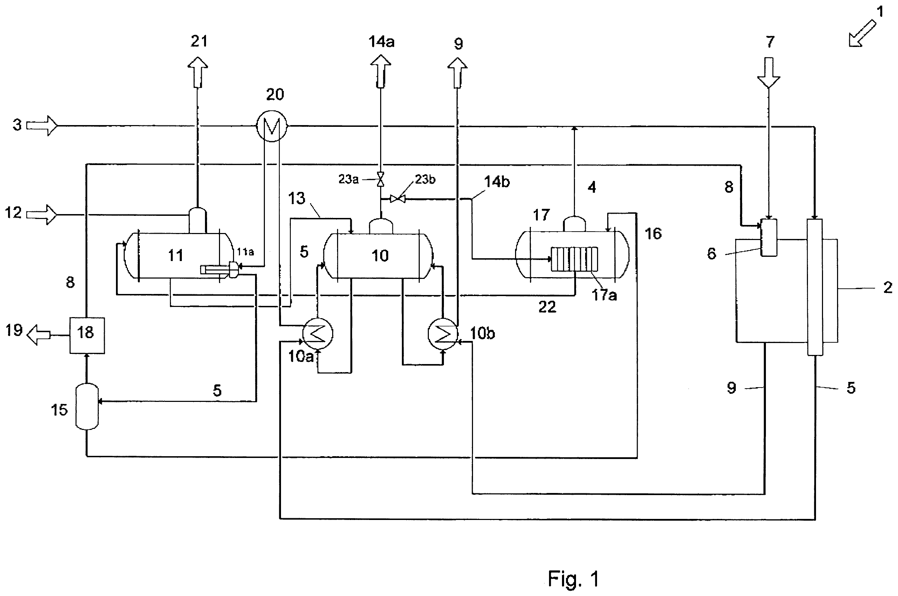

Das erfindungsgemäße Verfahren soll im Folgenden anhand der Zeichnung Fig. 1 erläutert werden. Dabei zeigt:
- Fig. 1: ein Fließbild einer beispielhaften Ausführung der erfindungsgemäßen Anlage

### Fig. 1:

Das Fließbild zeigt eine beispielhafte Ausführung der erfindungsgemäßen Anlage 1, die in diesem Beispiel zur Erzeugung von Wasserstoff aus einem kohlenwasserstoffhaltigen Einsatzgas, wie z. B. Erdgas und Wasserdampf dient. Dargestellt sind nur die zum Verständnis der Erfindung wesentlichen Teile der Anlage bzw. des Verfahrens.

In dem als Röhrenofen ausgeführten SMR-Reformer 2 wird das aus Erdgas 3 und Prozessdampf 4 bestehende Einsatzgas in hauptsächlich aus Kohlenmonoxid und Wasserstoff bestehendes Synthesegas 5 umgewandelt. Der SMR-Reformer 2 wird mit Brennern 6, von denen hier nur einer dargestellt ist, beheizt, die mit Luft 7 und Brenngas 8 betrieben werden, wobei ein Rauchgas 9 erzeugt wird. Um die im Synthesegas 5 und im Rauchgas 9 enthaltene Wärme zu nutzen, werden diese als Wärmeträgermedium zur Beheizung des Dampfkessels 10, mittels der Wärmetauscher 10a und 10b, und das Synthesegas 5 zusätzlich auch zur Beheizung des Erdgases 3, mittels Wärmetauscher 20, und des Entgasungskessels 11, mittels des Wärmetauschers 11a, verwendet. Im Entgasungskessel 11 wird Kesselspeisewasser 12 thermisch entgast, das ausgetriebene Gas 21 wird aus der Anlage ausgeleitet. Das entgaste und erwärmte Kesselspeisewasser wird über Leitung 13 in den Dampfkessel 10 gegeben, in dem es zu Reindampf 14 verdampft wird. Ein Teil des Reindampfs 14 wird als Exportdampf 14a aus dem Verfahren bzw. der Anlage ausgeleitet, der andere Teil 14b, wird, als Heizdampf, zur Beheizung des Dampfkessels 17 verwendet, der mit dem innenliegenden Plattenwärmetauscher 17a ausgestattet ist. Das in Wärmetauscher 17a entstandene Kondensat wird über Leitung 22 in den Entgasungskessel 11 zurückgeführt.

Mit den Ventilen 23 a und 23 b werden jeweils die Drücke der Dämpfe 14 a und b eingestellt.

Das Rauchgas 9 wird, nach dem Wärmeaustausch mit Kesselspeisewasser in Wärmetauscher 10b, zur weiteren Behandlung aus dem Verfahren ausgeleitet.

In Kondensatabscheider 15 wird im Synthesegas gebildetes wässriges Kondensat 16 abgetrennt und in Dampfkessel 17 eingeleitet. Dort wird es, mittels des Wärmetauschers 17a, zu Prozessdampf 4 verdampft, wobei ein Teilstrom des Reindampfs 14 als Heizdampf 14a, Wärmeträgermedium, verwendet und anschließend in den Entgasungskessel 11 eingeführt wird. Nach der Kondensatabscheidung wird das Synthesegas 5 in der pressure-swing-adsorption-Anlage 18 behandelt, wobei der Wasserstoffanteil 19 aus dem Synthesegas abgetrennt und zur weiteren Behandlung aus der Anlage bzw. dem Verfahren ausgeleitet wird. Das nach der Wasserstoffabtrennung verbleibende Restgas 8 wird als Brenngas 8 den Brennern 6 des SMR-Reformers 2 zugeleitet.

### Gewerbliche Anwendbarkeit

Die Erfindung stellt ein alternatives Verfahren und eine alternative Anlage zur Erzeugung von Synthesegas durch Dampfreformierung eines kohlenwasserstoffhaltigen Gases zur Verfügung. Dabei wurde das System zur Erzeugung von Prozessdampf neu gestaltet, wodurch energetische und konstruktive Vorteile erzielt werden. Die Erfindung ist daher gewerblich anwendbar.

### Bezugszeichenliste

- 1: Erfindungsgemäße Anlage
- 2: SMR-Reformer
- 3: Erdgasstrom
- 4: Prozessdampf
- 5: Synthesegas
- 6: Brenner
- 7: Luft zur Verbrennung
- 8: Rest-/Brenngas
- 9: Rauchgas
- 10: Dampfkessel für Exportdampf, mit Wärmetauschern 10a, b
- 11: Entgasungskessel mit Wärmetauscher 11a
- 12: Kesselspeisewasser, frisch
- 13: Kesselspeisewasser, entgast
- 14: Reindampf
- 14a: Exportdampf
- 14b: Heizdampf
- 15: Kondensatabscheider
- 16: Kondensat
- 17: Dampfkessel für Prozessdampf, mit Wärmetauscher 17a
- 18: Pressure-swing-adsorption Anlage
- 19: Wasserstoff
- 20: Wärmetauscher
- 21: Gas, aus Kesselspeisewasser ausgetrieben
- 22: Leitung zur Kondensatrückführung
- 23: a, b Ventil zur Regelung des Dampfdrucks

## Patentansprüche

1. Verfahren zur Erzeugung eines hauptsächlich aus Wasserstoff und Kohlenmonoxid bestehenden Synthesegases durch katalytische Dampfreformierung eines kohlenwasserstoffhaltigen Einsatzgases, wobei die für den Ablauf der chemischen Reformierungsreaktionen erforderliche Wärme von Brennern unter Erzeugung eines Rauchgases erzeugt wird und wobei, unter Nutzung der im Synthesegas und im Rauchgas enthaltenen Wärme, ein Reindampf aus Kesselspeisewasser und ein Prozessdampf aus Prozesskondensat erzeugt wird, **dadurch gekennzeichnet, dass** für die Erzeugung des Reindampfs Synthesegas und Rauchgas und für die Erzeugung des Prozessdampfs ein Teil des Reindampfs als Wärmeträgermedium verwendet wird und der restliche Teil des Reindampfs als Exportdampf aus dem Verfahren ausgeleitet wird und dass die jeweiligen Drücke des Teils des Reindampfs, der als Wärmeträgermedium für die Erzeugung von Prozessdampf verwendet wird, und des Teils, der als Exportdampf aus dem Verfahren ausgeleitet wird, unabhängig voneinander eingestellt werden.

2. Anlage zur Durchführung des Verfahrens gemäß Anspruch 1, umfassend:
- Mindestens einen Röhrenofen zur Durchführung der katalytischen Dampfreformierung,
- Einen Kessel zur thermischen Entgasung von Kesselspeisewasser,
- Einen Dampfkessel zur Erzeugung von Reindampf aus Kesselspeisewasser,
- Jeweils mindestens einen Wärmetauscher für die Erwärmung und Verdampfung des Kesselspeisewassers durch Synthesegas und durch Rauchgas,
- Mindestens einen Apparat zur mechanischen Abtrennung von Kondensat aus dem Synthesegas,
- Einen Dampfkessel zur Erzeugung von Prozessdampf, ausgestattet mit einem Wärmetauscher geeignet zur Verwendung von Reindampf als Wärmeträgermedium,
**dadurch gekennzeichnet, dass** separate Regelungsvorrichtungen für die Einstellung und Regelung der Drücke des Teils des Reindampfs, der als Wärmeträgermedium für die Erzeugung von Prozessdampf verwendet wird, und des Teils, der als Exportdampf aus dem Verfahren ausgeleitet wird, vorhanden sind.

3. Anlage gemäß Anspruch 2, **dadurch gekennzeichnet, dass** der Dampfkessel zur Erzeugung von Prozessdampf mit einem innenliegenden Plattenwärmetauscher ausgestattet ist.

4. Anlage gemäß einem der Ansprüche 2 oder 3, **dadurch gekennzeichnet, dass** die mit Prozesskondensat und Prozessdampf in Berührung kommenden Anlagenteile aus rostfreiem Stahl bestehen.

## Claims

1. A process for producing a synthesis gas chiefly consisting of hydrogen and carbon monoxide by catalytic steam reformation of a hydrocarbonaceous feed gas, wherein the heat of burners required for the chemical reforming reactions to take place is generated by producing a flue gas and wherein, by utilizing the heat contained in the synthesis gas and in the flue gas, a pure steam is generated from boiler feed water and a process steam is generated from process condensate, **characterized in that** for the generation of the pure steam synthesis gas and flue gas are used and for the generation of the process steam a part of the pure steam is used as heat-transfer medium and the remaining part of the pure steam is discharged from the process as export steam, and that the respective pressures of that part of the pure steam which is used as heat-transfer medium for the generation of process steam and that part which is discharged from the process as export steam are adjusted independent of each other.

2. A plant for carrying out the process according to claim 1, comprising:
At least one tubular furnace for carrying out the catalytic steam reformation,
A boiler for the thermal degasification of boiler feed water,
A steam boiler for the generation of pure steam from boiler feed water,
At least one heat exchanger each for heating and evaporating the boiler feed water by synthesis gas and by flue gas,
At least one apparatus for the mechanical separation of condensate from the synthesis gas,
A steam boiler for the generation of process steam, equipped with a heat exchanger suitable for the use of pure steam as heat-transfer medium,
**characterized in that** separate control devices are present for adjusting and regulating the pressures of that part of the pure steam which is used as heat-transfer medium for the generation of process steam and of that part which is discharged from the process as export steam.

3. The plant according to claim 2, **characterized in that** the steam boiler for the generation of process steam is equipped with an internal plate heat exchanger.

4. The plant according to any of claims 2 to 3, **characterized in that** the plant sections getting in contact with process condensate and process steam are made of stainless steel.

## Revendications

1. Processus pour créer un gaz de synthèse consistant principalement en de l'hydrogène et du monoxyde de carbone par reformage catalytique à la vapeur d'un gaz d'alimentation hydrocarboné, dans lequel la chaleur des brûleurs requise pour que les réactions de reformage chimique se produisent est générée en produisant un gaz de carneau et dans lequel, en utilisant la chaleur contenue dans le gaz de synthèse et dans le gaz de carneau, une vapeur pure est générée à partir d'eau d'alimentation de chaudière et une vapeur industrielle est générée à partir de condensat industriel, **caractérisé en ce que**, pour la génération de la vapeur pure, on utilise du gaz de synthèse et du gaz de carneau et, pour la génération de la vapeur industrielle, on utilise une partie de la vapeur pure comme agent de transfert de chaleur, et la partie restante de la vapeur pure est déchargée du processus comme vapeur d'exportation, et **en ce que** les pressions respectives de cette partie de la vapeur pure qu'on utilise comme agent de transfert de chaleur pour la génération de vapeur industrielle et de cette partie qui est déchargée du processus comme vapeur d'exportation sont réglées indépendamment l'une de l'autre.

2. Installation pour exécuter le processus selon la revendication 1, comprenant :
au moins un four tubulaire pour exécuter le reformage catalytique à la vapeur,
une chaudière pour le dégazage thermique de l'eau d'alimentation de chaudière,
une chaudière à vapeur pour la génération de vapeur pure à partir d'eau d'alimentation de chaudière,
au moins un échangeur de chaleur chacun pour chauffer et évaporer l'eau d'alimentation de chaudière par gaz de synthèse et gaz de carneau,
au moins un appareil pour la séparation mécanique de condensat du gaz de synthèse,
une chaudière à vapeur pour la génération de vapeur industrielle, équipée d'un échangeur de chaleur approprié pour l'utilisation de vapeur pure comme agent de transfert de chaleur,
**caractérisée en ce que** des dispositifs de commande séparés sont présents pour régler et réguler les pressions de cette partie de la vapeur pure qui est utilisée comme agent de transfert de chaleur pour la génération de vapeur industrielle et de cette partie qui est déchargée du processus comme vapeur d'exportation.

3. Installation selon la revendication 2, **caractérisée en ce que** la chaudière à vapeur pour la génération de vapeur industrielle est équipée d'un échangeur de chaleur à plaques interne.

4. Installation selon l'une quelconque des revendications 2 à 3, **caractérisée en ce que** les sections de cette installation entrant en contact avec le condensat industriel et la vapeur industrielle sont faites en acier inoxydable.
